# EUROPEAN PATENT SPECIFICATION

(11) **EP 2 708 419 B1**
(45) Date of publication and mention of the grant of the patent: **11.07.2018**
(21) Application number: 13184963.0
(22) Date of filing: 18.09.2013
(51) Int. Cl.: B60R 13/02, F16B 5/00, B60R 13/01

(54) **Assembly of an attachment means and a lining element, transportation means, use of an assembly and method for lining**
Baugruppe aus einem Befestigungsmittel und einem Auskleidungselement, Transportmittel, Verwendung einer Baugruppe und Verfahren zum Auskleiden
Ensemble d'un moyen de fixation et élément de revêtement, moyens de transport, utilisation d'un ensemble et procédé pour le revêtement

(30) Priority: 18.09.2012 BE 201200620
(43) Date of publication of application: 19.03.2014
(73) Proprietor: Hebic, 2850 Boom (BE)
(72) Inventor: De Winter, Bruno, 2850 Boom (BE)
(74) Representative: Gevers Patents

(56) References cited:
- EP-A2- 1 090 812
- DE-U1-202004 014 514

## Description

### Technical field

The invention relates to an assembly of an attachment means and a lining element which is arranged for lining an inner side of a wall of a transportation means such as a delivery car, a delivery van or a truck. The invention also relates to a transportation means provided with an assembly. The invention also relates to a construction kit provided with an assembly. The invention also relates to a pressing element. The invention also relates to the use of an assembly. The invention also relates to a method for lining an inner side of a wall of a transportation means such as a delivery car, a delivery van or a truck, by means of an assembly of an attachment means and a lining element which is arranged for lining the inner side.

### Background art

Inner sides of walls of vehicles such as a deliver car, a delivery van or a track, are often provided with a lining. Such a lining may for example be made substantially of a plastic. The lining may have different function. By means of a lining a chance of a direct contact between cargo and wall may for example be reduced. In such a way the chance of damage of the cargo and/or the wall may be reduced. The lining may also be attractive from a decorative point of view. The lining may further reduce a chance of a user of a transportation means hurting himself on the inner side of a wall of the transportation means. Lining for an inner side of a wall of a vehicle is normally attached to that inner side. In such a way it may be prevented that the lining shifts along the inner side and/or detaches from the inner side. Different attachment methods are known, such as attachment with the aid of glue or screws.

Known inner sides of walls of vehicles such as a delivery car, a delivery van or a truck, may also be provided with a hook or such, for by means of a rope or band, or by means of another binding means securing of cargo in the vehicle. Such a hook may for example be welded to the inner side of the vehicle.

Although both the hook, or another engagement means, and the lining are of importance, the simultaneous application of them may lead to problems. So, the lining should be interrupted around a welded hook. An additional free edge may thus occur in the lining, where for example damage may occur or accumulation of dirt may take place relatively easy.

An assembly of an attachment means and a lining element is known from DE 20 2004 014514 U1.

### Disclosure of the invention

Therefore, it is an aim of the invention to provide an improved assembly of an attachment means and a lining element in accordance with claims 1 to 10. According to an aspect of the invention there is provided an assembly of an attachment means and a lining element which is arranged for lining an inner side of wall of a transportation means such as a delivery car, a delivery van or a truck, wherein the attachment means is arranged for attaching the lining element to said inner side, wherein the lining element is provided with a lining element opening, and the lining element has a first principal side which, in use, is facing the inner side, and has a second principal side which, in use, is facing away from the inner side, wherein the attachment means is provided with a pressing element with a pressing side, wherein at least a part of the pressing element extends, in use, along the second principal side and presses against the second principal side, and wherein the attachment means is provided with a, preferably detachable, clamping means which is arranged to extend at least partially through the lining element opening and to be able to realise a mechanical connection with the wall of the transportation means and with the pressing element, which mechanical connection enables clamping the lining element between the pressing element and the inner side by means of the clamping means, wherein the pressing element also has an attachment side lying opposite of the pressing side, and is provided, at the attachment side, with at least one engagement element. The engagement element is shaped as an eye and the engagement element is arranged to guide therethrough a binding means, for example a rope or band, such that the binding means may engage with the eye.

By means of the pressing element an opening edge of the lining element opening of the lining element may be covered at least partially. In such a way damaging of contamination of said opening edge may be prevented.

Also, by providing the engagement element at the attachment side, the attachment element may be used by guiding therethrough a rope or band or another binding means, for example a chain or cable. By means of said binding means cargo may be secured in the vehicle. The attachment element thus also provides in an engagement element. Problems with simultaneous application of lining and engagement elements to the inner side of a wall of a vehicle may thus, at least partially, be satisfied.

The eye may have different shapes. In an embodiment the eye is closed in itself. A band inserted through the eye may then only escape from the eye by letting an end of the band pass through the eye. Alternatively, the eye is an open eye, for example a hook shaped eye. In such an embodiment a band extended and inserted through the eye may escape from the eye by moving the band transversal to the direction of extension of the band. In an embodiment the eye is flat and/or slot shaped. A slot shaped eye may be combined well with a band as binding means, since the shapes of a band and a slot shaped eye may be chosen complementary. A space enclosed by the eye may thus be used relatively well. Indeed, said space may be occupied for a relatively large part by the band, while typical advantages of the band as binding means may be used. An open eye may for example be closed at most 90% and/or at least 70%. An open eye may for example be open for at most 10% and/or at least 30%. Said percentages relate to a length of a circumference of the eye over which material may or may not be present.

According to the invention, the pressing element is provided at the attachment side with at least a protrusion. The protrusion is provided with a recess which forms the eye of the at least one engagement element. Such an engagement element may be shaped in a relatively solid construction.

Preferably, the pressing element has a central part which is surrounded by the part of the pressing element which, in use, extends along the second principal side and presses against the second principal side.

In this embodiment the central part is recessed with respect to the part of the pressing element which, in use, extends along the second principal side and presses against the second principal side, such that, in use, the central part may be placed in the lining element opening and may optionally pass through the lining element opening. In this way a chance of lateral displacement of the lining elements may be reduced.

In an embodiment the pressing element is provided with a least two engagement elements, each forming an eye. The at least two engagement elements are located on opposite sides of the central part. Space may thus be provided for letting engage a binding means, for example a rope or band or a combination thereof, through each of the eyes. A relative symmetric load of the attachment element may also be achieved, for example by guiding a binding means through both eyes, optionally by guiding one and the same binding means through both eyes.

In an embodiment, a further engagement element is provided, separable from the pressing element. This further engagement element is directly connected to the clamping element. It may thus be achieved that, in use, traction forces exerted by the binding means on the further engagement element may substantially be guided directly via the clamping element to the wall of the transportation means without thereby having to be transferred via the pressing element. A relatively reliable attachment element may thus be provided.

In an embodiment the clamping means comprises a mounting part. The inner side comprises an inner side part complementary to the mounting part. The mounting part and the inner side part complementary thereto are arranged such that the mounting part may engage with the complementary inner side part so as to be able to realise the mechanical connection with the wall of the transportation means.

In an embodiment the mounting part comprises a plate shaped element. The plate shaped element is arranged to engage with the complementary inner side part.

In an embodiment the complementary inner side part comprises a wall opening. The mounting part may pass at least partially through the wall opening. After this passing, the mounting part, at least the passed part of the mounting part may remain hanging behind the complementary inner side part. The mechanical connection with the wall of the transportation means may thus for example be realised.

In an embodiment the pressing element is provided with a positioning element which is complementary to a shape of the lining element opening, especially fits clampingly against, or is placed with tolerance with respect to, an opening edge of the lining element defined by the lining element opening. The positioning element is surrounded by the part of the pressing element which extends, in use, along the second principal side and presses against the second principal side.

In an embodiment the assembly is provided with a plurality of similar lining elements. Each lining element is provided with a similar lining element opening. In use, the lining element openings of the plurality of lining elements fit onto each other. In use, the lining element openings of the plurality of lining elements cooperate with one and the same attachment means.

A transportation means provided with an assembly according to the invention is also provided in accordance with claim 11. Use of an assembly according to the invention is also provided, for securing a cargo in the transportation means in accordance with claim 12. According to an aspect of the invention a method is provided in accordance with the features of claim 13. The method is carried out by means of an assembly according to the invention.

### Brief description of the drawings

The invention will further be described and illustrated by means of non-limiting drawings, wherein:
Figure 1A shows an inner side of a wall of a transportation means;
Figure 1B shows a detail of figure 1A;
Figure 2 also shows, in a somewhat different view from the view of figure 1A, the inner side of the wall of the transportation means of figures 1A and 1B;
Figure 3A shows a view of an attachment means in a first embodiment;
Figure 3B shows the attachment means of figure 3A with a band which runs through an eye of the attachment means;
Figure 4A shows an attachment means in a second embodiment;
Figure 4B shows the attachment means of figure 4A with a band which runs through an eye of the attachment means;
Figure 5 shows a section A-A' of an attachment means, indicated in figure 3A; and
Figure 6-6A-6D show different views of a part of an attachment means according to the invention.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

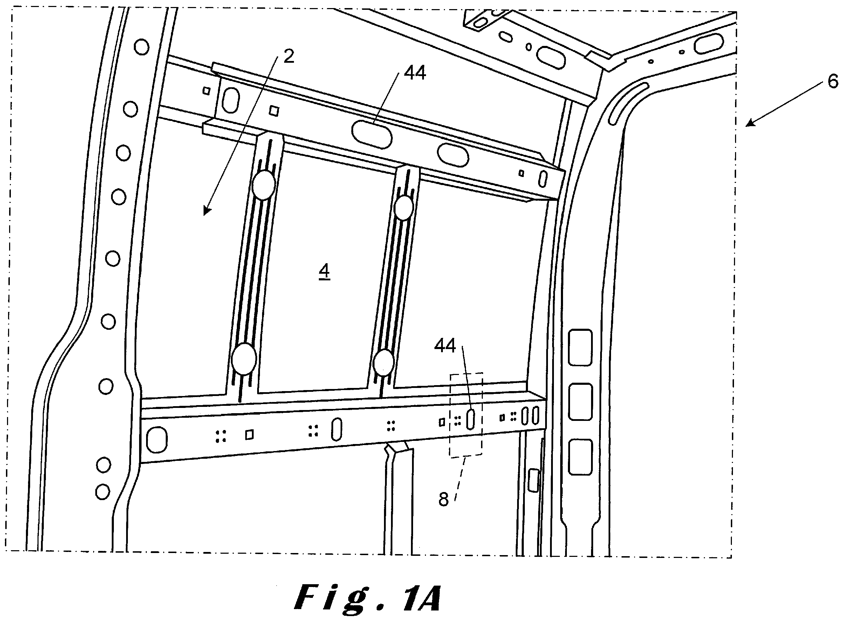

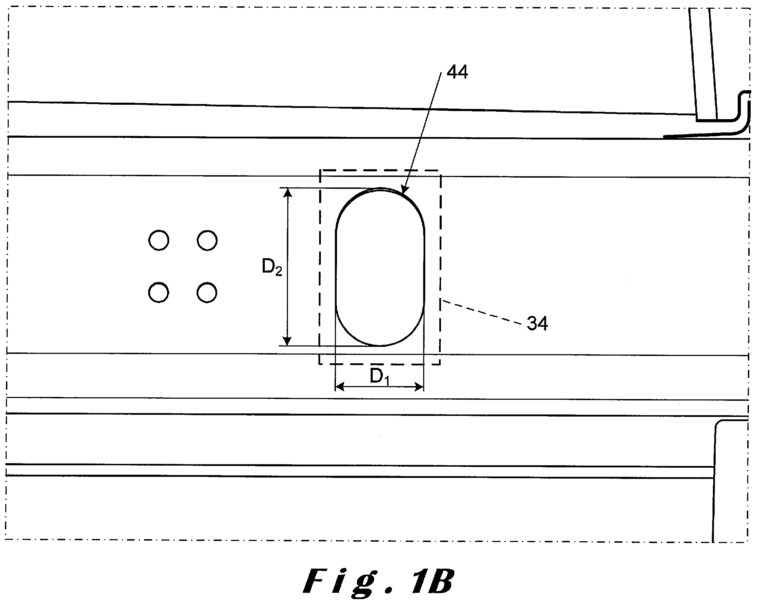

Figure 1A shows an inner side 2 of a wall 4 of a transportation means 6. Figure 1B shows a detail 8 of figure 1A. In figure 1A an inner side of a wall of a delivery van is shown. The invention may however also be applied to other transportation means or vehicles, such as for example a delivery car, a truck, a train, an airplane and/or a ship or another vessel.

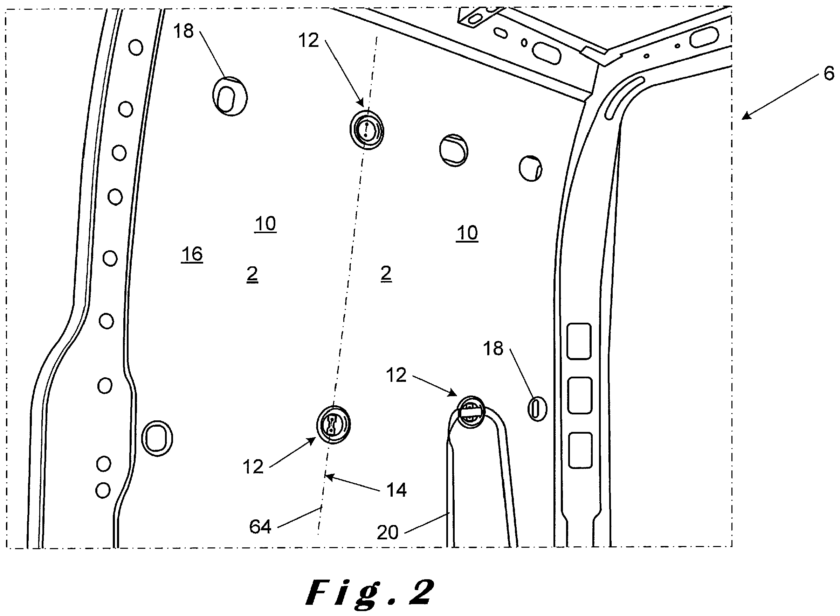

Figure 2 also shows, in a somewhat different view from the view of figure 1A, the inner side 2 of the wall 4 of the transportation means of figures 1A and 1B. In figure 2 the inner side 2 is provided with lining elements 10. Figure 2 shows two lining elements 10, with a mutual separation displayed by striped separation line 14. These lining elements may be made substantially, for example for at least 80% of their mass, of a plastic, or of wood or of another material, or of a combination of wood, plastic and/or another material. Figure 2 also shows a number of attachment means 12. These attachment means 12 are arranged for attaching one or more lining elements 10 to said inner side 2 of the wall 4. An assembly of at least one attachment means 12 and least one lining element 10 forms an assembly according to an embodiment of the invention. It will be clear that such an assembly is arranged for lining the inner side 2.

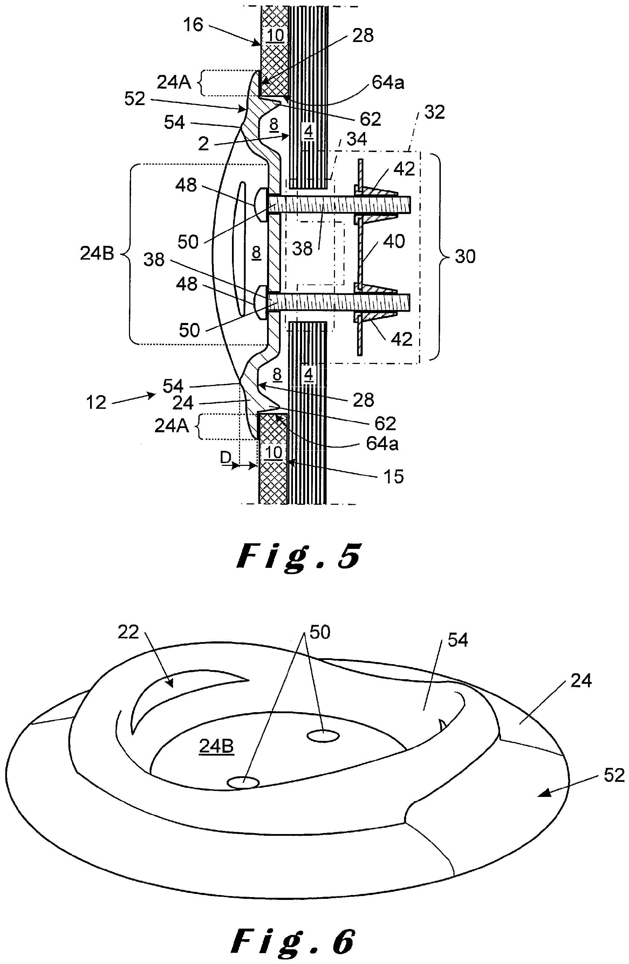

The lining elements 10 each have a first principal side which, in use, is facing the inner side 2, and a second principal side 16 which, in use, is facing away from the inner side 2. The first principal side is not visible in figure 2, but is visible in figure 5 with reference number 15. It will be clear that the first and second principal side are located opposite of each other, at opposite sides of the wall 4. The lining elements 10 are each provided with a lining element opening 18, i.e. at least one lining element opening and possibly multiple lining element openings. In the example of figure 2 the one visible lining element 10 is provided with four lining element openings 18, and the other visible lining element 10 is provided with six lining element openings 18. Such as visible in figure 2, some lining element openings 18 are completely surrounded by material of one and the same lining element 10. Other lining element openings 18 are however only partially surrounded by material of a single lining element 10. Such as visible in figure 2, the latter lining element openings 18 are located at a side edge 64 of a lining element 10. In figure 2 the side edges 64 which are provided with lining element openings 18, run along the separation line 14.

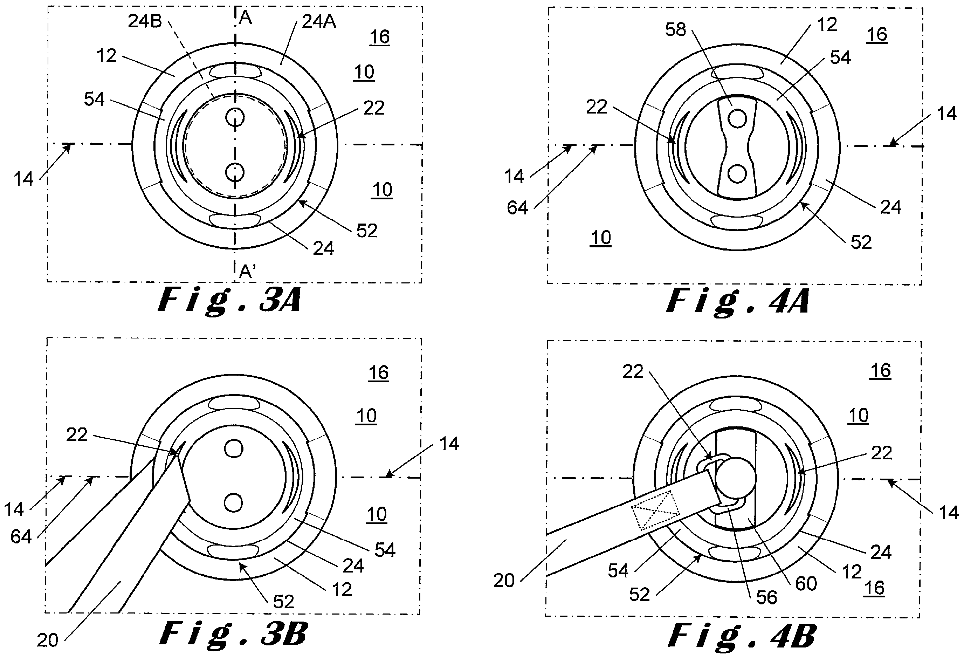

Figures 3A and 3B show a view of an attachment means 12 in a first embodiment. In figure 3B a band 20 runs through an eye 22 of the attachment means 12. It will be clear from figure 3B that a space enclosed by the bracket shaped eye 22 is occupied by the band for a relatively large part. The band 20 may for example be used to secure cargo in the transportation means 6. Sliding of the cargo during transport may cause damage to the cargo, the lining elements 10, and/or the vehicle 6. Figures 4A and 4B show an attachment means 12 in a second embodiment. In figure 4B a band 20 runs through an eye 22 of an additional engagement means. Figure 5 shows a section A-A' of the attachment means 12, indicated in figure 3A. Figures 3A, 3B, 4A, 4B, and/or 5 also shows the lining elements 10 with separation line 14, the first principal side 15 of a lining element 10, the second principal side 16 of a lining element 10, the lining element openings 18, and the inner side 2 of the wall 4.

The attachment means 12 is provided with a pressing element 24 with a pressing side 28. At least a part 24A of the pressing element 24 extends, in use, along the second principal side 16 and presses in use against the second principal side 16. The attachment means 12 is provided with a, preferably detachable, clamping means 30. The clamping means is arranged to extend, at least partially, through the lining element opening 18. The clamping means 30 is also arrange to realise a mechanical connection with the wall of the transportation means and with the pressing element. In an embodiment the clamping means 30 comprises a mounting part which is arranged to engage with the inner side of the wall 4, especially with a inner side part 34 complementary to the mounting part. In the embodiment example of figure 5, the clamping means 30 comprises a bracket shaped mounting part 32. In the embodiment example of figure 5 the mounting part is thus bracket shaped. The inner side 2 also comprises an inner side part 34 complementary to the bracket shaped mounting part 32, indicated in figures 1A, 1B, and 5. The bracket shaped mounting part 32 may be formed by two bolts 36 with bolt ends 38, and a connection element 40 with which the bolt ends 38 may engage. The connection element 40 is for example plate shaped. It may be provided with nuts 42 with which the bolts 38 may engage by being screwed in them. In particular from figure 5 it will be clear that screwing the bolts may result in that the lining element 10 is clamped between the pressing element 24 and the inner side 2. In an embodiment example, the nuts may be attached securely to the connection element 40. Because of the combination of at least two nuts which are connected to connection element 40, the bolts may be screwed and lining elements 10 be clamped without that the connection element 40 needs to be held manually. Such a clamping means 30 is convenient for attaching lining elements, because with screwing the bolts and clamping the lining elements, the connection element is usually located outside manual range of a user.

The bracket shaped part 32 and the inners side part 34 complementary thereto are arranged such that the mounting part, especially the bracket shaped mounting part, may engage with the complementary inner side part so as to be able to realise the mechanical connection with the wall 4 of the transportation means. Such a mechanical connection may for example be achieved by placing a plate shaped connection element 40 comprised in a wall opening 44 through the complementary inner side part. Said wall opening is preferably shaped asymmetrically, whereby the connection element 40 may pass through the wall opening 44 but also, after this passing, may remain hanging behind the complementary inner side part and thus the mechanical connection with the wall 4 of the transportation means may be realised. Alternatively, or additionally, the connection element 40, especially the plate shaped connection element, is shaped asymmetrically. The plate shaped connection element is preferably round or circular shaped. In a generally applicable embodiment a maximum dimension of the connection element is preferably larger than a minimum dimension D₁ of the wall opening 44, such that the connection element may remain hanging behind the wall after passing through the wall opening. In a generally applicable embodiment a minimum dimension of the connection element is preferably larger than a maximum dimension D₂ of the wall opening 44, which furthers the passing of the connection element through the wall opening. Dimension D₁ and D₂ are indicated in figure 1B.

The bolts 38 are also provided with bolt heads 48. The bolt heads 48 are preferably provided with a slot or another engagement means for the engagement of a screwing means therewith. In an embodiment the pressing element 24 is provided with holes 50 with dimensions such that the bolts 38 may be moved through the holes 50 with exception of the bolt heads 48. By screwing the bolts, the wall 4 and the lining element 10 may be clamped between the connection element 40 and the pressing element 24. Because of said mechanical connection, attaching the lining element 10 between the pressing element 24 and the inner side 2 of the wall 4 by means of the clamping means 30 becomes thus possible.

The pressing element 24 also has an attachment side 52 opposite of the pressing side 28. At the attachment side 52 the pressing element is provided with at least one engagement element which is shaped as an eye 22 and is arranged to guide therethrough a binding means such as a rope or band such that the binding means may engage with the eye 22. The pressing element 24 is preferably provided at the attachment side with at least one protrusion 54. The protrusion 54 preferably merges smoothly into a remaining surface of the pressing element 24 at the attachment side 52, which may benefit the solidity of the eye 22. In the embodiment examples of figures 3A-5 the protrusion is provided with two recesses which each form an eye of an engagement element. The pressing element 24 is thus provided with two engagement elements. The eyes may be slot shaped, such as shown in figures 3A-4B. It will be clear from figure 3B that a space enclosed by the slot shaped eye 22 is occupied for a relatively large part by the band. In figures 3A-4B there is also shown a protrusion which extends along a curved, in this example round and circular shaped, path along the engagement side 52.

More generally, in an embodiment, the pressing element is made substantially in one piece. The pressing element may for example be made substantially of a plastic, or of a metal such as aluminium, or of wood. Said plastic may for example be polyamide, nylon, and/or polypropylene. The pressing element may for example be manufactured by means of an injection moulding process. A metal pressing element 24, preferably in combination with a metal clamp element 30, may be beneficial when relatively heavy cargoes need to be tied. A pressing element substantially made in one piece may be relatively strong. A pressing element substantially made in one piece may be provided with the protrusion in a beneficial way. The pressing element may for example be shaped by casting a plastic or metal at increased temperature in a mould for shaping the pressing element. The mould may be shaped such that the pressing element provided with the protrusion. After opening the mould one ore more eyes may be arranged in the protrusion. Alternatively, the protrusion may for example be glued or attached in another way onto a remaining part of the pressing element.

The pressing element 24 has a central part 24B which is surrounded by the part 24A of the pressing element 24 which extends, in use, along the second principal side 16 and presses against the second principal side 16. Such as visible in figures 3A-4B, the at least two engagement elements are located at opposite sides of the central part 24B. The central part 24B is preferably recessed with respect to the part 24A of the pressing element which extends, in use, along the second principal side 16 en presses against the second principal side. As a result hereof the central part 24B may, in use, be placed in the lining element opening 18 and optionally pass through the lining element opening 18. Distance elements (not shown in the figures but by itself conventional and generally applicable) may be placed between a lining element 10 and the inner side 2 of the wall 4. In this way space may be created for passing the central part 24B in and optionally through the lining element opening 18 of the lining element 10. Distance element may, alternatively or additionally, be arranged for damping vibrations in a lining element 10. Distance elements may for example comprise rubber or another elastically deformable material. By recessing the central part 24B a relatively small lateral displacement, i.e. in a direction approximately parallel with the first or second principal plane, may lead to mechanical interaction between a lining element and the pressing element. As a consequence of said mechanical interaction a larger, significant, lateral displacement may be prevented or at least be countered. In this way a chance of an undesired significant lateral displacement of lining elements may be reduced.

In the second embodiment of Figs. 4A-B the assembly is, besides two slot shaped eyes, also provided with a further engagement element 56. The further engagement element 56 comprises a first coupling piece 58 and a second coupling piece 60 which may be coupled to the first coupling piece. The second coupling piece 60 is provided with an eye 22 on which a band, rope, cable, or chain may be attached. The first coupling piece 58 is clamped with the bolts 38 to a remaining part of the pressing element 24. The further engagement element 56 is separable from the pressing element 24. The further engagement element 56 is directly connected to the clamping element 30. Such a direct connection may be achieved by letting the clamping element 30, especially the bolts 38, engage directly with the first coupling piece 58. Thus is enabled that, in use, traction forces exerted by the binding means on the further engagement element may substantially be guided directly via the clamping element 30 to the wall 4 of the transportation means 6 without thereby having to be transferred via the pressing element 24. In use the first and second coupling piece are coupled directly with each other, such that a force exerted on the eye 22 of the second coupling piece guides directly, via the first coupling piece 58, to the clamping element 30 and the wall 4. A relatively reliable attachment element 12 may thus be provided. A strength and thickness of the pressing element may thereby optionally be reduced. The further engagement element is preferably arranged centrally in the pressing element 24, for example near or against the central part 24B. An advantageous force transfer may thus be achieved, whereby lateral forces in a direction approximately parallel with the first and second principal side may be reduced.

The pressing element 24 may be provided with a positioning element 62. The positioning element 62 is preferably complementary to a shape of a lining element opening 18. The positioning element 62 may for example fit clamping against an opening edge 64A of a lining element defined by the lining element opening. There may alternatively be some, for example at most 1 millimetre, or more than 1 millimetre, tolerance between said opening edge 64A and the positioning element 62, such that the positioning element may be placed with tolerance with respect to said opening edge 64A. The positioning element 62 is surrounded by the part 24A of the pressing element 24 which extends, in use, along the second principal side 16 and presses against the second principal side 16. The positioning element may for example be shaped as a ridge. Alternatively, or additionally, the positioning element may comprise positioning elements placed at a distance from each other. The part 24A of the pressing element 24 which extends, in use, along the second principal side 16 and, thus in use, presses against the second principal side 16, may be shaped as a collar which surrounds the positioning element 62. The positioning element 62 may for example be located between the central part 24 of the pressing element 24B and the part 24A of the pressing element which extends, in use, along the second principal side 16 and presses against the second principal side 16.

In figures 3A-4B, and also in figure 2, is shown that lining elements 10, in use, fit together. Such a fitting preferably occurs outside the first and second principal plane. The lining elements 10 thus preferably fit together at a side edge 64 of the lining elements 10, more preferably only at one side edge 64 of the lining elements 10. The lining elements in for example figures 3A-4B are each provided with a similar lining element opening, covered here by a single pressing element 24. In use the lining element openings 18 of the lining elements 10 may fit together and cooperate with one and the same attachment means 12 provided with the single pressing element 24. In each of the figures 3A-4B is thus shown an assembly of an attachment means 12 and a plurality of similar lining elements 10. In the embodiment examples of figures 3A-4B the lining element openings are located at a side edge 64 of a lining element 10. Alternatively, or additionally, the lining element openings are located at a corner point of the lining elements 10. In an embodiment, more generally, an assembly is provided with at least one single attachment element 12 and with at least four lining elements 10 with each at least one corner point, wherein the at least four lining elements 10 are each at least provided with a lining element opening 18 at their at least one corner point.

Returning to figure 2, there is shown an embodiment of an assembly wherein the lining element 10 lines the inner side 2 of the wall 4 of the transportation means 6 because the lining element 10 is attached to the inner side 2 of the wall of the transportation means 6 by means of the attachment means 12. The first principal side 15 is facing the inner side and the second principal side 16 is facing away from the inner side. The pressing element 24 extends at least partially along the second principal side 16 and presses, in attached state, against the second principal side 16. The detachable clamping means 30 extends at least partially through the lining element opening and realises the mechanical connection with the wall 4 of the transportation means 6 and with the pressing element 24. A transportation means 6 is thus provided with a lining element 10 and an attachment element 24.

The protrusion preferably has a maximum dimension, measured from a point located at the pressing side 28 of the pressing element 24. Said point is also located at the part 24A of the pressing element 24 which, in use, extends along the second principal side 16 and presses against the second principal side 16. Said maximum dimension is also measured in a direction perpendicular to the pressing side 28. Said maximum dimension is measured analogue to the determination of dimension D such as shown in figure 5. Dimension D may be conceived as the distance over which the protrusion, in use, extends with respect to the second principal side 16. It should be noted that the maximum dimension of the protrusion 54 of described embodiment examples is not shown in the section of figure 5, but that instead thereof a smaller than maximum dimension is shown. In described embodiment examples the extent of protruding of the protrusion may, in use, vary with respect to the second principal side 16 along the path along which the protrusion 54 extends.

Said maximum dimension of the protrusion is preferably, i.e. the maximum extension of the protrusion 54 in use with respect to the second principal side, at least 0,5 centimetre, preferably at least 0,7 centimetre, more preferably at least 0,9 centimetre. Alternatively, or additionally, said maximum dimension of the protrusion is at most 5 centimetre, preferably at most 3 centimetre, more preferably at most 1,5 centimetre. If said dimension is too small this may be detrimental for a strength of the eye. If said dimension is too large, it may limit the cargo space of the transportation means too much and/or make a chance of bumping against the protrusion too large, which may lead to damage.

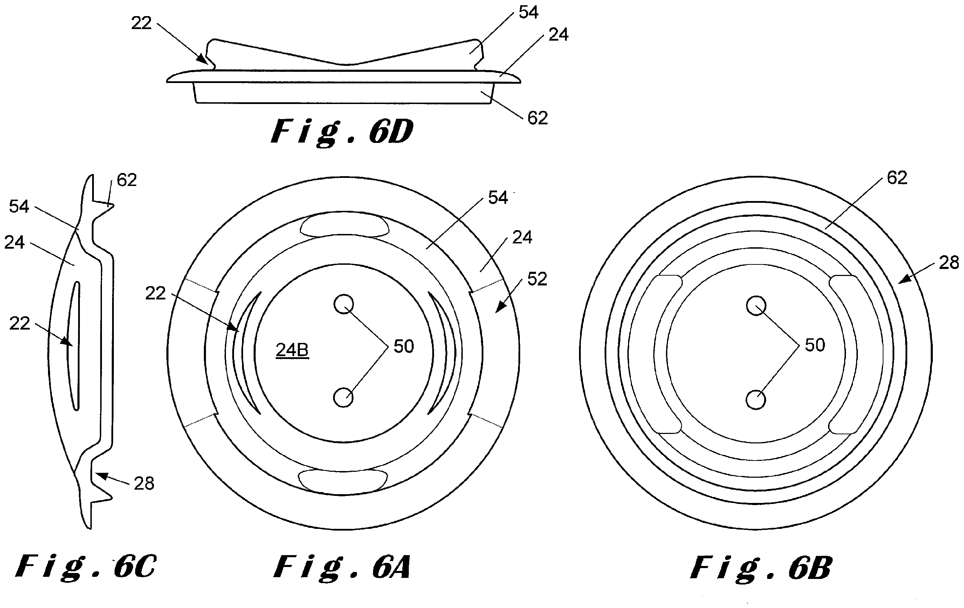

Figure 6 and 6A-6D respectively show a perspective view, a top view, a bottom view, a section and a side view of the pressing part 24.

An embodiment of a method according to the invention may be carried out for example by means of an embodiment of an assembly such as described with reference to figures 1A-5. Such an embodiment may comprise lining an inner side 2 of a wall 4 of a transportation means 6, such as a delivery car, a delivery van or a truck, by means of an assembly of an attachment means 12 and a lining element 10. The lining element 10 is arranged for lining the inner side 2.

The embodiment of the method comprises attaching the lining element 10 to the inner side 2 of the wall 4 of the transportation means 6 by means of the attachment element 12. The lining is carried out such that a first principal side 15 of the lining element 10 is facing the inner side 2 of the wall 4 and a second principal side 16 of the lining element 10 is facing away from the inner side 2 of the wall 4. The attachment means 12 is provided with a detachable clamping means 30.

Said attaching of the lining element 10 to the inner side 2 of the wall 4 of the transportation means 6, comprises making at least a part of the clamping means 30 extend through the lining element opening 18. The attaching further comprises realising a mechanical connection with the wall 4 of the transportation means 6 and with a pressing element 24 of the attachment means 12 by means of the clamping means 30. As a consequence of attaching, at least a part of the pressing element 24 extends along the second principal side 16. As a consequence of attaching, at least a part of the pressing element 24 presses against the second principal side 16. Because of the mechanical connection clamping the lining element 10 between the pressing element 24 and the inner side 2 may be realised. The lining element may thus be attached to said inner side 2.

The pressing element 24 is provided with at least one engagement element which is shaped as an eye and is arranged to guide therethrough a binding means, for example a rope, chain, cable, or band. After the binding means is guided through the eye, the binding means may engage with the eye. Further, it will be clear that by means of said embodiment of the method, a transportation means 6 in an embodiment according to the invention may be obtained. By means of the binding means cargo in the transportation means may be secured. The assembly may thus be used for securing said cargo in the transportation means 6.

The invention is not limited to the embodiments described above. An assembly according to the invention may for example be provided as construction kit, or as part of a construction kit. By means of such a construction kit, a user may apply one or more lining elements of the construction kit to the inner side 2 of the wand 4, by means of one ore more attachment means 12. The invention also relates to the pressing element 12, which may be provided in combination with the clamping element 30 or without the clamping element 30. The wall may generally be a side wall of the vehicle which forms a boundary of the vehicle, or a partition wall of the vehicle which is located internally in the vehicle and does not form a boundary of the vehicle. It should be noted that the invention offers advantages in particular for side walls, because such side walls are usually relatively solid and thereby suited for connecting a binding means thereto for securing cargo in the vehicle. The invention however also offers advantages for partition walls. Note that the term "wall" or "side wall" may also comprise a possible wall at the top and/or bottom. The term "band" may also comprise a belt.

## Claims

1. Assembly of an attachment means (12) and a lining element (10) which is arranged for lining an inner side (2) of a wall (4) of a cargo space of a transportation means (6) such as a delivery car, a delivery van or a truck, wherein the attachment means (12) is arranged for attaching the lining element (10) to said inner side (2), wherein the lining element (10) is provided with a lining element opening (18), and the lining element (10) has a first principal side (15) which, in use, is facing the inner side (2), and has a second principal side (16) which, in use, is facing away from the inner side (2), wherein the attachment means (12) is provided with a pressing element (24) with a pressing side (28), wherein at least a part (24A) of the pressing element (24), in use, extends along the second principal side (16) and presses against the second principal side (16), and wherein the attachment means (12) is provided with a, preferably detachable, clamping means (30) which is arranged to extend at least partially through the lining element opening (18) and to be able to realise a mechanical connection with the wall (4) of the transportation means (6) and with the pressing element (24), which mechanical connection enables clamping of the lining element (10) between the pressing element (24) and the inner side (2) by means of the clamping means (30), wherein the pressing element (24) also has an attachment side (52) opposite of the pressing side (28) and, at the attachment side (52), is provided with at least one engagement element which is shaped as an eye (22) and is arranged to guide therethrough a binding means such that the binding means may engage with the eye (22), **characterised in, that** the pressing element (24) is provided at the attachment side (52) with at least one protrusion (54) with therein at least one recess which forms the eye (22) of the at least one engagement element.

2. Assembly according to claim 1, wherein the pressing element (24) has a central part (24B) which is surrounded by the part (24A) of the pressing element (24) which extends, in use, along the second principal side (16) and presses against the second principal side (16), wherein the central part (24B) is recessed with respect to the part (24A) of the pressing element (24) which extends, in use, along the second principal side (16) and presses against the second principal side (16), such that, in use, the central part (24B) may be placed in the lining element opening (18) and optionally may pass through the lining element opening (18).

3. Assembly according to claim 1 or 2, wherein the pressing element (24) has a central part (24B) which is surrounded by the part (24A) of the pressing element (24) which extends, in use, along the second principal side (16) and presses against the second principal side (16), wherein the pressing element (24) is provided with at least two engagement elements, wherein the at least two engagement elements are located at opposite sides of the central part (24B).

4. Assembly according to any one of the claims 1-3, comprising a further engagement element which is separable from the pressing element (24), and is connectable directly to the clamping element (30), such that, in use, traction forces exerted by the binding means on the further engagement element may substantially be guided directly via the clamping means (30) to the wall (4) of the transportation means (6) without having to be transferred via the pressing element (24).

5. Assembly according to any one of the claims 1-4, wherein the clamping means (30) comprises a mounting part (32), and wherein the inner side (2) comprises an inner side part (34) complementary to the mounting part (32), wherein the mounting part (32) and the inner side part (34) complementary thereto are arranged such that the mounting part (32) may engage with the complementary inner side part (34) so as to be able to realise the mechanical connection with the wall (4) of the transportation means (6).

6. Assembly according to claim 5, wherein the mounting part (32) is bracket shaped and is formed by at least two bolts with bolt ends, and comprises a connection element (40) which is arranged to engage with the complementary inner side part (34), which connection element (40) is provided with nuts (42) with which the bolts may engage, wherein the bolts are also provided with bolt heads (48), and wherein the pressing element (24) is provided with holes (50) with dimensions such that the bolts may be moved through the holes (50) with exception of the bolt heads (48).

7. Assembly according to claim 5 or 6, wherein the mounting part (32) comprises a plate shaped element which is arranged for engaging with the complementary inner side part (34).

8. Assembly according to any one of the claims 5-7, wherein the complementary inner side part (34) comprises a wall opening (44) through which the mounting part (32) may pass at least partially and, after this passing, may remain hanging behind the complementary inner side part (34), and thus the mechanical connection with the wall (4) of the transportation means (6) may be realised.

9. Assembly according to any one of the claims 1-8, wherein the pressing element (24) is provided with a positioning element (62) which is complementary to a shape of the lining element opening (18), especially fits clampingly against, or is placed with tolerance with respect to, an opening edge (64a) of the lining element (10) defined by the lining element opening (18), and is surrounded by the part (24A) of the pressing element (24) which extends, in use, along the second principal side (16) and presses against the second principal side (16).

10. Assembly according to any one of the claims 1-9, provided with a plurality of similar lining elements (10), each provided with a similar lining element opening (18), wherein, in use, the lining element openings (18) of the plurality of attachment elements fit together and cooperate with one and the same attachment means (12).

11. Transportation means (6) provided with an assembly according to any one of the claims 1-10, wherein the lining element (10) lines the inner side (2) of the wall (4) of the transportation means (6) because the lining element (10) is attached to the inner side (2) of the wall (4) of the transportation means (6) by means of the attachment means (12), wherein the first principal side (15) is facing the inner side (2) and the second principal side (16) is facing away form the inner side (2), wherein the pressing element (24) extends at least partially along the second principal side (16) and presses against the second principal side (16), wherein the detachable clamping means (30) extends at least partially through the lining element opening (18) and realises the mechanical connection with the wall (4) of the transportation means (6) and with the pressing element (24).

12. Use of an assembly according to any one of the claims 1-10, for securing cargo in the transportation means (6).

13. Method for lining an inner side (2) of a wall (4) of a cargo space of a transportation means (6) such as a delivery car, a delivery van or a truck, by means of the assembly according to any of the claims 1-10, wherein the method, for attaching the lining element (10) to the inner side (2) of the wall (4) of the transportation means (6) by means of the attachment element, comprises the steps of:
arranging the lining element (10) at the inner side (2) of the wall (4) such that the first principal side (15) of the lining element (10) is facing the inner side (2) of the wall (4) and the second principal side (16) of the lining element (10) is facing away from the inner side (2) of the wall (4),
making at least a part of the clamping means (30) extend through a lining element opening (18) in the lining element (10), and
realising a mechanical connection with the wall (4) of the transportation means (6) and with the pressing element (24) of the attachment means (12) by means of the clamping means (30), wherein at least a part (24A) of the pressing element (24) extends along the second principal side (16) and presses against the second principal side (16), thereby realising clamping of the lining element (10) between the pressing element (24) and the inner side (2).

## Patentansprüche

1. Baugruppe eines Befestigungsmittels (12) und eines Verkleidungselements (10), angeordnet zum Verkleiden einer Innenseite (2) einer Wand (4) eines Laderaums eines Transportmittels (6), wie ein Zustellfahrzeug, ein Lieferwagen oder ein Lastkraftwagen, wobei das Befestigungsmittel (12) angeordnet ist, um das Verkleidungselement (10) an der erwähnten Innenseite (2) zu befestigen, wobei das Verkleidungselement (10) mit einer Verkleidungselementöffnung (18) bereitgestellt ist, und das Verkleidungselement (10) eine erste Hauptseite (15), die, während der Anwendung, zur Innenseite (2) gerichtet ist, und eine zweite Hauptseite (16), die, während der Anwendung, weg von der Innenseite (2) gerichtet ist, hat, wobei das Befestigungsmittel (12) mit einem Druckelement (24) mit einer Druckseite (28) versehen ist, wobei zumindest ein Abschnitt (24A) des Druckelements (24) sich, während der Anwendung, entlang der zweiten Hauptseite (16) erstreckt und gegen die zweite Hauptseite (16) drückt, und wobei das Befestigungsmittel (12) mit einem, bevorzugt abnehmbaren, Klemmmittel (30) versehen ist, welches angeordnet ist, um sich zumindest teilweise durch die Verkleidungselementöffnung (18) zu erstrecken und in der Lage zu sein, eine mechanische Verbindung mit der Wand (4) des Transportmittels (6) und mit dem Druckelement (24) herzustellen, wobei die mechanische Verbindung ein Festklemmen des Verkleidungselements (10) zwischen dem Druckelement (24) und der Innenseite (2) mittels des Klemmmittels (30) erlaubt, wobei das Druckelement (24) auch eine Befestigungsseite (52) gegenüber der Druckseite (28) hat und, an der Befestigungsseite (52), mit zumindest einem Eingreifelement versehen ist, welches wie ein Auge (22) geformt ist und angeordnet ist, um dadurch ein Bindemittel zu führen, sodass das Bindemittel in das Auge (22) eingreifen kann, **dadurch gekennzeichnet, dass** das Druckelement (24) an der Befestigungsseite (52) mit zumindest einem Überstand (54) mit darin zumindest einer Vertiefung versehen ist, welche das Auge (22) des zumindest einen Eingreifelements bildet.

2. Baugruppe nach Anspruch 1, wobei das Druckelement (24) einen zentralen Abschnitt (24B) hat, der durch den Abschnitt (24A) des Druckelements (24) umgeben ist, welches sich, während der Anwendung, entlang der zweiten Hauptseite (16) erstreckt und gegen die zweite Hauptseite (16) drückt, wobei der zentrale Abschnitt (24B) in Bezug zum Abschnitt (24A) des Druckelements (24), welches sich, während der Anwendung, entlang der zweiten Hauptseite (16) erstreckt und gegen die zweite Hauptseite (16) drückt, vertieft ist, sodass, während der Anwendung, der zentrale Abschnitt (24B) in die Verkleidungselementöffnung (18) platziert werden kann und optional durch die Verkleidungselementöffnung (18) hindurchgehen kann.

3. Baugruppe nach Anspruch 1 oder 2, wobei das Druckelement (24) einen zentralen Abschnitt (24B) hat, der durch den Abschnitt (24A) des Druckelements (24) umgeben ist, welches sich, während der Anwendung, entlang der zweiten Hauptseite (16) erstreckt und gegen die zweite Hauptseite (248) drückt, wobei das Druckelement (24) mit zumindest zwei Eingreifelementen versehen ist, wobei die zumindest zwei Eingreifelemente an gegenüberliegenden Seiten des zentralen Abschnitts (24B) angeordnet sind.

4. Baugruppe nach irgendeinem der Ansprüche 1 bis 3, welche ein weiteres Eingreifelement umfasst, welches abtrennbar vom Druckelement (24) ist, und direkt mit dem Klemmelement (30) verbunden werden kann, sodass, während der Anwendung, Zugkräfte, die durch das Bindemittel auf das weitere Eingreifelement ausgeübt werden, im Wesentlichen direkt über das Klemmmittel (30) zur Wand (4) des Transportmittels (6) geleitet werden können, ohne über das Druckelement (24) übertragen werden zu müssen.

5. Baugruppe nach irgendeinem der Ansprüche 1 bis 4, wobei das Klemmmittel (30) ein Montageteil (32) umfasst, und wobei die Innenseite (2) einen Innenseitenabschnitt (34), komplementär zum Montageteil (32), umfasst, wobei das Montageteil (32) und der dazu komplementäre Innenseitenabschnitt (34) so angeordnet sind, dass das Montageteil (32) in den komplementären Innenseitenabschnitt (34) eingreifen kann, um so in der Lage zu sein, die mechanische Verbindung mit der Wand (4) des Transportmittels (6) herzustellen.

6. Baugruppe nach Anspruch 5, wobei das Montageteil (32) klammerförmig ist und durch mindestens zwei Bolzen mit Bolzenenden gebildet ist, und ein Verbindungselement (40) umfasst, welches angeordnet ist, um in den komplementären Innenseitenabschnitt (34) einzugreifen, wobei das Verbindungselement (40) mit Muttern (42) versehen ist, in die die Bolzen eingreifen können, wobei die Bolzen auch mit Bolzenköpfen (48) versehen sind, und wobei das Druckelement (24) mit Löchern (50) mit solchen Abmessungen versehen ist, dass die Schrauben durch diese Löcher (50) bewegt werden können, mit Ausnahme der Schraubenköpfe (48).

7. Baugruppe nach Anspruch 5 oder 6, wobei das Montageteil (32) ein plattenförmiges Element umfasst, welches angeordnet ist, um in den komplementären Innenseitenabschnitt (34) einzugreifen.

8. Baugruppe nach irgendeinem der Ansprüche 5 bis 7, wobei der komplementäre Innenseitenabschnitt (34) eine Wandöffnung (44) umfasst, durch die das Montageteil (32) zumindest teilweise hindurchgehen kann und, nach diesem Hindurchgehen, hinter dem komplementären Innenseitenabschnitt (34) hängen bleiben kann, und so die mechanische Verbindung mit der Wand (4) des Transportmittels (6) hergestellt werden kann.

9. Baugruppe nach irgendeinem der Ansprüche 1 bis 8, wobei das Druckelement (24) mit einem Positionierungselement (62) versehen ist, welches komplementär zu einer Form der Verkleidungselementöffnung (18) ist, insbesondere festklemmend gegen einen Öffnungsrand (64a) des Verkleidungselements (10), definiert durch die Verkleidungselementöffnung (18), passt oder mit Spiel in Bezug dazu platziert wird, , und umgeben ist durch den Abschnitt (24A) des Druckelements (24), welches sich, während der Anwendung, entlang der zweiten Hauptseite (16) erstreckt und gegen die zweite Hauptseite (16) drückt.

10. Baugruppe nach irgendeinem der Ansprüche 1 bis 9, bereitgestellt mit einer Vielzahl ähnlicher Verkleidungselemente (10), jeweils versehen mit einer ähnlichen Verkleidungselementöffnung (18), wobei, während der Anwendung, die Verkleidungselementöffnungen (18) der Vielzahl von Befestigungselementen zusammenpassen und mit ein und demselben Befestigungsmittel (12) zusammenwirken.

11. Transportmittel (6) versehen mit einer Baugruppe nach irgendeinem der Ansprüche 1 bis 10, wobei das Verkleidungselement (10) die Innenseite (2) der Wand (4) des Transportmittels (6) verkleidet, weil das Verkleidungselement (10) an der Innenseite (2) der Wand (4) des Transportmittels (6) mittels der Befestigungsmittel (12) befestigt ist, wobei die erste Hauptseite (15) zur Innenseite (2) gerichtet ist und die zweite Hauptseite (16) weg von der Innenseite (2) gerichtet ist, wobei das Druckelement (24) sich zumindest teilweise entlang der zweiten Hauptseite (16) erstreckt und gegen die zweite Hauptseite (16) drückt, wobei das abnehmbare Klemmmittel (30) sich zumindest teilweise durch die Verkleidungselementöffnung (18) erstreckt und die mechanische Verbindung mit der Wand (4) des Transportmittels (6) und mit dem Druckelement (24) herstellt.

12. Verwendung einer Baugruppe nach irgendeinem der Ansprüche 1 bis 10, zur Sicherung von Fracht im Transportmittel (6).

13. Verfahren zum Verkleiden einer Innenseite (2) einer Wand (4) eines Laderaums eines Transportmittels (6), wie ein Zustellfahrzeug, ein Lieferwagen oder ein Lastkraftwagen, mittels der Baugruppe nach irgendeinem der Ansprüche 1 bis 10, wobei das Verfahren, zur Befestigung des Verkleidungselements (10) an der Innenseite (2) der Wand (4) des Transportmittels (6) mittels des Befestigungselements, folgende Schritte umfasst:
Anordnen des Verkleidungselements (10) an der Innenseite (2) der Wand (4), sodass die erste Hauptseite (15) des Verkleidungselements (10) zur Innenseite (2) der Wand (4) gerichtet ist und die zweite Hauptseite (16) des Verkleidungselements (10) weg von der Innenseite (2) der Wand (4) gerichtet ist,
Bewerkstelligen, dass zumindest ein Teil des Klemmmittels (30) sich durch eine Verkleidungselementöffnung (18) im Verkleidungselement (10) erstreckt, und
Herstellen einer mechanischen Verbindung mit der Wand (4) des Transportmittels (6) und mit dem Druckelement (24) des Befestigungsmittels (12) mittels des Klemmmittels (30), wobei zumindest ein Abschnitt (24A) des Druckelements (24) sich entlang der zweiten Hauptseite (16) erstreckt und gegen die zweite Hauptseite (16) drückt, wodurch ein Festklemmen des Verkleidungselements (10) zwischen dem Druckelement (24) und der Innenseite (2) bewirkt wird.

## Revendications

1. Ensemble d'un moyen de fixation (12) et d'un élément de garniture (10) qui est agencé pour garnir un côté intérieur (2) d'une paroi (4) d'un espace de cargaison d'un moyen de transport (6) tel qu'une voiture de livraison, une camionnette de livraison ou un camion, dans lequel le moyen de fixation (12) est agencé pour fixer l'élément de garniture (10) audit côté intérieur (2), dans lequel l'élément de garniture (10) est pourvu d'une ouverture d'élément de garniture (18), et l'élément de garniture (10) a un premier côté principal (15) qui, en utilisation, est orienté vers le côté intérieur (2), et a un second côté principal (16) qui, en utilisation, est orienté à l'opposé du côté intérieur (2), dans lequel le moyen de fixation (12) est pourvu d'un élément d'appui (24) avec un côté d'appui (28), dans lequel au moins une partie (24A) de l'élément d'appui (24), en utilisation, s'étend le long du second côté principal (16) et appuie contre le second côté principal (16), et dans lequel le moyen de fixation (12) est pourvu d'un moyen de serrage (30) de préférence détachable qui est agencé pour s'étendre au moins partiellement à travers l'ouverture d'élément de garniture (18) et pour être capable de réaliser un raccordement mécanique avec la paroi (4) du moyen de transport (6) et avec l'élément d'appui (24), lequel raccordement mécanique permet de serrer l'élément de garniture (10) entre l'élément d'appui (24) et le côté intérieur (2) au moyen du moyen de serrage (30), dans lequel l'élément d'appui (24) a également un côté de fixation (52) opposé au côté d'appui (28) et, au niveau du côté de fixation (52), est pourvu d'au moins un élément d'enclenchement qui a la forme d'un oeil (22) et est agencé pour guider au travers un moyen de liaison de sorte que le moyen de liaison puisse s'enclencher avec l'oeil (22), **caractérisé en ce que** l'élément d'appui (24) est pourvu au niveau du côté de fixation (52) d'au moins une protubérance (54) avec là-dedans au moins un évidement qui forme l'oeil (22) de l'au moins un élément d'enclenchement.

2. Ensemble selon la revendication 1, dans lequel l'élément d'appui (24) a une partie centrale (24B) qui est entourée par la partie (24A) de l'élément d'appui (24) qui s'étend, en utilisation, le long du second côté principal (16) et appuie contre le second côté principal (16), dans lequel la partie centrale (24B) est en retrait par rapport à la partie (24A) de l'élément d'appui (24) qui s'étend, en utilisation, le long du second côté principal (16) et appuie contre le second côté principal (16), de sorte que, en utilisation, la partie centrale (24B) puisse être placée dans l'ouverture d'élément de garniture (18) et puisse facultativement passer à travers l'ouverture d'élément de garniture (18).

3. Ensemble selon la revendication 1 ou 2, dans lequel l'élément d'appui (24) a une partie centrale (24B) qui est entourée par la partie (24A) de l'élément d'appui (24) qui s'étend, en utilisation, le long du second côté principal (16) et appuie contre le second côté principal (16), dans lequel l'élément d'appui (24) est pourvu d'au moins deux éléments d'enclenchement, dans lequel les au moins deux éléments d'enclenchement sont situés au niveau de côtés opposés de la partie centrale (24B).

4. Ensemble selon l'une quelconque des revendications 1 à 3, comprenant un élément d'enclenchement supplémentaire qui peut être séparé de l'élément d'appui (24), et peut être raccordé directement à l'élément de serrage (30), de sorte que, en utilisation, des forces de traction exercées par le moyen de liaison sur l'élément d'enclenchement supplémentaire puissent être sensiblement guidées directement via le moyen de serrage (30) vers la paroi (4) du moyen de transport (6) sans avoir à être transférées via l'élément d'appui (24).

5. Ensemble selon l'une quelconque des revendications 1 à 4, dans lequel le moyen de serrage (30) comprend une partie de montage (32), et dans lequel le côté intérieur (2) comprend une partie de côté intérieur (34) complémentaire de la partie de montage (32), dans lequel la partie de montage (32) et la partie de côté intérieur (34) complémentaire de celle-ci sont agencées de sorte que la partie de montage (32) puisse s'enclencher avec la partie de côté intérieur complémentaire (34) de façon à être capable de réaliser le raccordement mécanique avec la paroi (4) du moyen de transport (6).

6. Ensemble selon la revendication 5, dans lequel la partie de montage (32) est en forme de crochet et est formée par au moins deux boulons avec des extrémités de boulon, et comprend un élément de raccordement (40) qui est agencé pour s'enclencher avec la partie de côté intérieur complémentaire (34), lequel élément de raccordement (40) est pourvu d'écrous (42) avec lesquels les boulons peuvent s'enclencher, dans lequel les boulons sont également pourvus de têtes de boulon (48), et dans lequel l'élément d'appui (24) est pourvu de trous (50) avec des dimensions telles que les boulons peuvent être déplacés à travers les trous (50) à l'exception des têtes de boulon (48).

7. Ensemble selon la revendication 5 ou 6, dans lequel la partie de montage (32) comprend un élément en forme de plaque qui est agencé pour s'enclencher avec la partie de côté intérieur complémentaire (34).

8. Ensemble selon l'une quelconque des revendications 5 à 7, dans lequel la partie de côté intérieur complémentaire (34) comprend une ouverture de paroi (44) à travers laquelle la partie de montage (32) peut passer au moins partiellement et, après ce passage, peut rester suspendue derrière la partie de côté intérieur complémentaire (34), et ainsi le raccordement mécanique avec la paroi (4) du moyen de transport (6) peut être réalisé.

9. Ensemble selon l'une quelconque des revendications 1 à 8, dans lequel l'élément d'appui (24) est pourvu d'un élément de positionnement (62) qui est complémentaire d'une forme de l'ouverture d'élément de garniture (18), s'ajuste particulièrement en serrage contre, ou est placé avec tolérance par rapport à, un bord d'ouverture (64a) de l'élément de garniture (10) défini par l'ouverture d'élément de garniture (18), et est entouré par la partie (24A) de l'élément d'appui (24) qui s'étend, en utilisation, le long du second côté principal (16) et appuie contre le second côté principal (16).

10. Ensemble selon l'une quelconque des revendications 1 à 9, pourvu d'une pluralité d'éléments de garniture (10) similaires, chacun étant pourvu d'une ouverture d'élément de garniture (18) similaire, dans lequel, en utilisation, les ouvertures d'élément de garniture (18) de la pluralité d'éléments de fixation s'ajustent ensemble et coopèrent avec le même moyen de fixation (12).

11. Moyen de transport (6) pourvu d'un ensemble selon l'une quelconque des revendications 1 à 10, dans lequel l'élément de garniture (10) garnit le côté intérieur (2) de la paroi (4) du moyen de transport (6) car l'élément de garniture (10) est fixé au côté intérieur (2) de la paroi (4) du moyen de transport (6) au moyen du moyen de fixation (12), dans lequel le premier côté principal (15) est orienté vers le côté intérieur (2) et le second côté principal (16) est orienté à l'opposé du côté intérieur (2), dans lequel l'élément d'appui (24) s'étend au moins partiellement le long du second côté principal (16) et appuie contre le second côté principal (16), dans lequel le moyen de serrage détachable (30) s'étend au moins partiellement à travers l'ouverture d'élément de garniture (18) et réalise le raccordement mécanique avec la paroi (4) du moyen de transport (6) et avec l'élément d'appui (24).

12. Utilisation d'un ensemble selon l'une quelconque des revendications 1 à 10, pour arrimer une cargaison dans le moyen de transport (6).

13. Procédé de garniture d'un côté intérieur (2) d'une paroi (4) d'un espace de cargaison d'un moyen de transport (6) tel qu'une voiture de livraison, une camionnette de livraison ou un camion, par l'intermédiaire de l'ensemble selon l'une quelconque des revendications 1 à 10, dans lequel le procédé de fixation de l'élément de garniture (10) au côté intérieur (2) de la paroi (4) du moyen de transport (6) par l'intermédiaire de l'élément de fixation, comprend les étapes de :
agencement de l'élément de garniture (10) au niveau du côté intérieur (2) de la paroi (4) de sorte que le premier côté principal (15) de l'élément de garniture (10) soit orienté vers le côté intérieur (2) de la paroi (4) et le second côté principal (16) de l'élément de garniture (10) soit orienté à l'opposé du côté intérieur (2) de la paroi (4),
fait d'amener au moins une partie du moyen de serrage (30) à s'étendre à travers une ouverture d'élément de garniture (18) dans l'élément de garniture (10), et
réalisation d'un raccordement mécanique avec la paroi (4) du moyen de transport (6) et avec l'élément d'appui (24) du moyen de fixation (12) au moyen du moyen de serrage (30), dans lequel au moins une partie (24A) de l'élément d'appui (24) s'étend le long du second côté principal (16) et appuie contre le second côté principal (16), réalisant ainsi le serrage de l'élément de garniture (10) entre l'élément d'appui (24) et le côté intérieur (2).
